# EUROPEAN PATENT APPLICATION

(11) **EP 0 683 224 A2**
(43) Date of publication of application: **22.11.1995**
(21) Application number: 95303174.7
(22) Date of filing: 11.05.1995
(51) Int. Cl.: C12H 1/14, B67D 1/04, B67D 1/12

(54) **Improvements in and relating to beer and other beverages and a method of dispensing beer and other beverages, particularly lager**

(30) Priority: 18.05.1994 GB 9410308; 07.11.1994 GB 9422395
(71) Applicant: Bass Public Limited Company, Burton-on-Trent, Staffordshire DE14 2WB (GB)
(72) Inventor: Price, Stephen Geoffrey, Ashbourne, Derbyshire DE6 5QH (GB)
(74) Representative: Lawrence, John

(57) **Abstract**

A method of dispensing lager is disclosed. The method ensures that a glass of lager (10) is dispensed which consists of initially, almost entirely, an opaque latent head. The latent head settles out, over a period of minutes, leaving a glass of clear lager (24) with a substantially stable head on top 23. The method consists of introducing, just before dispense, a volume of pressurised gas or liquid with a high gas content into the lager. A nucleation site generating means is provided at the dispense tap. The method also requires that the lager has a high nitrogen content, low carbon dioxide content and is chilled to 2°C.

## Description

This invention relates to improvements in and relating to dispensing beverages, especially but not exclusively alcoholic beverages such as beer, lager and stout.

It is known to dispense beer through a dispenser which helps to create a head. Public houses have beer taps with adjustable nozzles to create a head on the beer.

It is known to dispense some stouts, for example Guinness (registered Trade Mark), through taps which create a dispersion or suspension of bubbles in the beverage as it is dispensed so as to produce a large white, creamy, latent head (or proto head) which settles out over a minute or so to form a stable head above a cleared body. This has been known for many years.

An aim of the present invention is to provide a new way of dispensing a beverage so as to generate a large latent head.

According to a first aspect of the invention we provide a method of dispensing a beverage so as to produce a relatively large latent head comprising many bubbles of gas suspended or dispersed in a beverage, comprising introducing to the beverage at the point of dispensing it, or just before it is dispensed, an amount of pressurised gas, or of liquid with an amount of dissolved gas in it.

The beverage may be super saturated, saturated or provided with a considerable amount of gas, for example CO₂.

The bubbles from the gas that is introduced, or that are evolved from the liquid which is gas-laden, form nucleation sites and help to create very many small bubbles in the beverage which produces a relatively large latent head.

The gas, or gas laden liquid, is preferably injected into the beverage.

A relatively small volume of high pressure gas, or highly gas-laden liquid is preferably introduced into the beverage. Less than about 2%, or 1% (by volume) may be introduced. Preferably less than about ½% is introduced (perhaps about 1/3%). For example, about 2 millilitres of gas at 30 psi may be introduced as a pint of beverage is dispensed. Preferably the gas, or gas laden liquid, is introduced during the initial stage of delivery of a volume of beverage, or at an early stage during the delivery of a volume of beverage (in the early part of the beverage dispensed from a tap). Thus once the initial disturbance caused by the introduction of many nucleation sites has been achieved there may be no need to continue to provide additional nucleation sites to the beverage. The gas or gas-laden liquid may also be introduced to the beverage at intervals throughout dispense or at later stages of delivery of the beverage.

If a liquid which is laden with gas, preferably saturated or super-saturated with gas, is used the liquid preferably comprises substantially the same beverage as is being dispensed.

The gas involved is preferably nitrogen, or air, or carbon dioxide, or a mixture of all three or any two of the three. However, other gases may be used, for example argon, or another gas that is inert relative to the beverage. An insoluble gas is expected to produce very many small nucleation sites, which will assist in the production of a large latent head.

The beverage is preferably dispensed from a dispensing nozzle orifice, and the gas or gas-laden liquid is introduced to the beverage at the nozzle or orifice, or just upstream of it. The gas or gas-laden liquid may be introduced before an on/off valve in the dispense nozzle, or after the on/off valve.

In an alternative, the gas or gas-laden liquid may not meet the beverage until the beverage is dispensed into a vessel. For example, the beverage may be dispensed from one opening, and the gas, or gas-laden liquid may be dispensed from another opening, the beverage and gas, or gas-laden beverage, mixing just after dispense (in the vessel in which the beverage is collected).

In a further alternative the gas or gas-laden liquid may not be introduced at a later stage of the delivery of the beverage, but may be introduced at an earlier point.

The beverage preferably has dissolved in it a gas, such as carbon dioxide. Carbon dioxide (or other gas) is preferably at a level such that it is at, or below, the equilibrium solubility level of the carbon dioxide (or other gas) for the beverage at the dispense temperature.

According to a second aspect of the invention we provide beverage dispensing apparatus comprising dispense means for dispensing a beverage, and nucleation site generation means adapted to generate many small bubbles in the dispensed beverage.

The nucleation site generation means may comprise fluid introduction means adapted to introduce a fluid into the beverage.

The nucleation site generation means may comprise gas pressurisation means. This is preferably adapted to provide pressurised gas to the beverage. The gas pressurisation means may pressurise a volume of gas prior to injecting the gas into the beverage.

The nucleation site generating means may be adapted to introduce in use a gas or gas-laden liquid, into the beverage during dispense, or just before dispense. The fluid may be injected into the beverage. A small volume of fluid may be injected.

The beverage supply may be connected to the dispense means.

The nucleation site generating means may act in a dispense nozzle, or just upstream of a dispense nozzle. Instead of comprising the introduction of a gas, or gas-laden liquid, the nucleation site generating means may comprise some other means. For example, a rotating blade may create nucleation sites behind it due to the pressure reduction which may exist behind a rotating blade of the appropriate shape. This may be akin to cavitation effect. Sonic, or ultrasonic, nucleation site generation means may be provided.

When a quantity of gas is to be injected into the beverage the gas may be provided by a gas cylinder, or by hand-powered pressurisation means. For example, in a hand-operated beverage dispenser (for example a hand-pulled beer pump) the action of working the hand-operated beverage dispensing means may also pressurise a volume of gas, or which may also pump gas laden liquid.

Preferably a known volume of gas is injected at a known pressure, or a known volume of gas-laden beverage is introduced.

In one embodiment a manually operated beer pump may pump beer out of a cylinder by moving the handle in one direction, and may pressurise gas in another cylinder by the same movement, or by moving the handle back to its inoperative position.

There may be provided a supply of pre-pressurised gas, or of liquid which is gas-laden.

Sensor means may be provided, possibly associated with a beer-dispensing cylinder, in order to provide a signal to control the provision of the nucleation site fluid. The sensor may be a pressure sensor, or a position sensor, or any other suitable sensor.

The invention originally arose out of a consideration of how to provide a pint of lager initially substantially as an entire pint of opaque latent head. In that work we found that the level of carbon dioxide content could be important to the provision of the latent head, as could the pressure drop experienced by the beverage upon dispense, and as could the dissolved nitrogen content.

According to a third aspect of the invention we provide a glass of just-dispensed lager which is substantially entirely latent head comprising many bubbles suspended or disposed in lager, and having substantially no body of clear lager beneath the latent head.

The latent head is opaque and looks white. This has a different appearance from conventional lagers, and would appeal to some consumers. It will increase the sales of the new lager, compared with those that it would have if it did not have a differentiating appearance, and will therefore mean that the quality of the lager being dispensed is better because there will be less danger of the lager going stale in the barrels or pipelines. Furthermore, an increased level of activity in dispensing a particular lager from a public house will mean that the dispensing equipment will be in better condition since it can be maintained more frequently. Increasing the volume of sales of lager from a particular dispensing tap in the public house is clearly a desirable aim.

It will be appreciated that "a glass of just-dispensed lager" does not apply necessarily just to glasses. Although it is envisaged that lager will usually be dispensed in transparent glasses, the term "glass" is intended to cover any other drinking vessel.

Similarly, although we would usually envisage dispensing the lager from a tap (whether that be hand-pulled or gas pressured) the invention may possibly also be applicable to dispensing lagers in containers such as cans.

The glass of just-dispensed lager which is substantially entirely latent head settles out to form a body of clear lager with a relatively stable head on top of the clear body. This settling out process preferably takes at least 90 seconds to reach the stable condition (initially the foamy, creamy, suspension/dispersion of bubbles in the lager in the glass will be turbulent as the bubbles rise, but it will eventually settle to a relatively still body capped by a relatively stable head). It preferably takes at least 90 seconds to reach the stable condition, and more preferably about 2 or 3 minutes.

It preferably takes at least 30 seconds for half of the glass of latent head to be converted into a body of clear lager, and more preferably at least 45 seconds or 60 seconds, or 90 seconds, or 120 seconds.

According to a fourth aspect of the invention we provide a beverage, preferably lager, having a dissolved nitrogen content of at least 23 milligrammes per litre.

This is an extremely high nitrogen content and we believe that this results in small bubbles being formed, which means that the bubbles take a long time to rise through the liquid: the pint of beverage stays opaque for longer.

In some circumstances we may have even lower nitrogen content (for example if the carbon dioxide content enabled the initial creamy white appearance to be achieved, or for example if there were other means of creating sufficient nucleation sites).

Preferably the nitrogen content is between 23 and 47, or 50 milligrammes per litre, and more preferably between 30 to 40 milligrammes per litre. It may have a nitrogen content of about 35 milligrammes per litre plus or minus 5 milligrammes per litre.

Small bubbles are also far more stable than larger carbon dioxide bubbles which are present in conventional lagers (although this aspect of the invention is applicable to other beverages). This means that we can form a more stable head, and have better lacing. Our bubbles may be mainly carbon dioxide, or mainly nitrogen, or any mixture of the two.

According to a fifth aspect of the invention we provide a beverage, preferably a lager, having a carbon dioxide content of less than about 3.6 grammes per litre.

We have discovered that this enables the desired effect to be achieved.

Preferably the level of carbon dioxide in the beverage is such that it is below the equilibrium solubility level for beverage at the dispensing temperature. Indeed, we believe that another aspect of the invention comprises dispensing beverage with a carbon dioxide gas content that is at a level at or below equilibrium so that little carbon dioxide gas is evolved from the beverage.

We suspect that the high nitrogen content means that upon the initial pressure drop there are very many very tiny nitrogen bubbles formed in the beverage. These act as nucleation sites for carbon dioxide in the beverage. Even though the carbon dioxide is present at levels below equilibrium, the presence of nucleation sites causes some carbon dioxide to diffuse into the N₂ bubbles. However, this will be a slow process (compared with the prior art where the CO₂ is above equilibrium) and the bubbles will grow slowly, and rise slowly. Thus we believe that we should ensure that enough carbon dioxide comes out of solution to form a good head, in the settled lager (the head is predominately CO₂ and has a volume something like 50 to 100 cc), but that it should come out as very many tiny bubbles, not fewer larger bubbles (which rise faster), nor should the current vast amounts of CO₂ used in lager be used. This is only a theory.

Preferably the carbon dioxide content is between 2.0 and 3.2 grammes per litre.

More preferably the carbon dioxide content is more than 2.6 grammes per litre. We have discovered that lager does not taste so good if there is less than 2.6 grammes per litre of carbon dioxide.

Contrary to traditional thought, we have found that it is possible to reduce carbon dioxide content below its current levels without removing the "bite" of lager. We have found that if we also reduce the temperature at which the lager is dispensed (preferably to around 2°C) that this compensates for the lack of bite due to carbon dioxide - the cold giving a similar effect.

Reducing the temperature of lager to 2°C also runs against the face of conventional wisdom. It is conventionally thought that cold lagers taste "thin". We have surprisingly found that this effect can be countered by the lower carbon dioxide level. The lower carbon dioxide level appears to increase the frothing of the lager, making the taste fuller. Thus combining two steps which both go against traditional thinking has been discovered to give good results. Although we made the discoveries relating to high N₂/low CO₂ in relation to lager they may be applicable to other beverages.

According to a sixth aspect of the invention we provide a method of dispensing a glass of beverage, preferably lager, comprising ensuring that the beverage is at 2°C plus or minus 3°C when dispensed; ensuring that the beverage has a nitrogen (N₂) content of at least 23 milligrammes per litre; ensuring that the beverage has a carbon dioxide content of 3.6 grammes per litre or less; and dispensing the beverage in such a manner that a large latent head is formed during dispense.

Preferably the beverage is dispersed at 2°C plus or minus 2°C.

Preferably the temperature is about 2°C. The nitrogen content may be about 30 to 40 milligrammes per litre. The carbon dioxide content is preferably about 3 grammes per litre.

The pressure drop as the beverage is dispensed is preferably at least 32 psi, and more preferably at least about 40 psi, and even more preferably about 50 psi (or more). This is believed to give smaller bubbles in the beverage.

The invention may also be considered to be a method of improving the head on a glass of beverage, especially lager.

Another way of looking at the invention is as method of creating a glass of lager having a differentiated visual appearance from that of conventional glasses of lager, the method comprising dispensing lager which has a nitrogen (N₂) content such that nitrogen bubbles come out of solution upon dispense, and having a carbon dioxide content such that no large carbon dioxide bubbles come out of solution upon dispense, with the effect that the dispensed lager initially has the appearance of a creamy, foamy, head which retains its initial, turbulent, appearance for a substantial time.

It will be appreciated that although we have referred to N₂ as the gas that forms the bubbles, other gases could do so, for example an inert gas such as Argon. "Nitrogen" should be understood to represent any suitable gas that will not react with the beverage and is safe. Similarly, "carbon dioxide" may be another gas. "First gas" and "second gas" may be suitable terms.

The invention applies to all beverages, including low alcohol beverages, and alcohol free beverages, and even to non-alcoholic beverages, such as fruit juices and carbonated soft drinks.

Embodiments of the invention will now be described by way of example only, with reference to the accompanying drawings of which:-
Figure 1 is a schematic view of a dispensing system for displaying lager;
Figure 2 is a representation of a pint of lager immediately after it has dispensed.
Figure 3 is a representation of a pint of lager 3 minutes after it was dispensed;
Figure 4 is a representation of a pint of lager 1 minute after it was dispensed;
Figure 5 is a representation of a pint of lager after 20 minutes after it was dispensed, and after half of it has been drunk;
Figure 6 shows schematically that there is a relationship between the amount of dissolved nitrogen in the lager and the creamy latent head effect;
Figure 7 shows schematically that there is a relationship between the amount dissolved carbon dioxide in the lager and the creamy latent head effect; and
Figure 8 shows schematically another way of dispensing any beverage, not just lager, so as to create a large latent head.

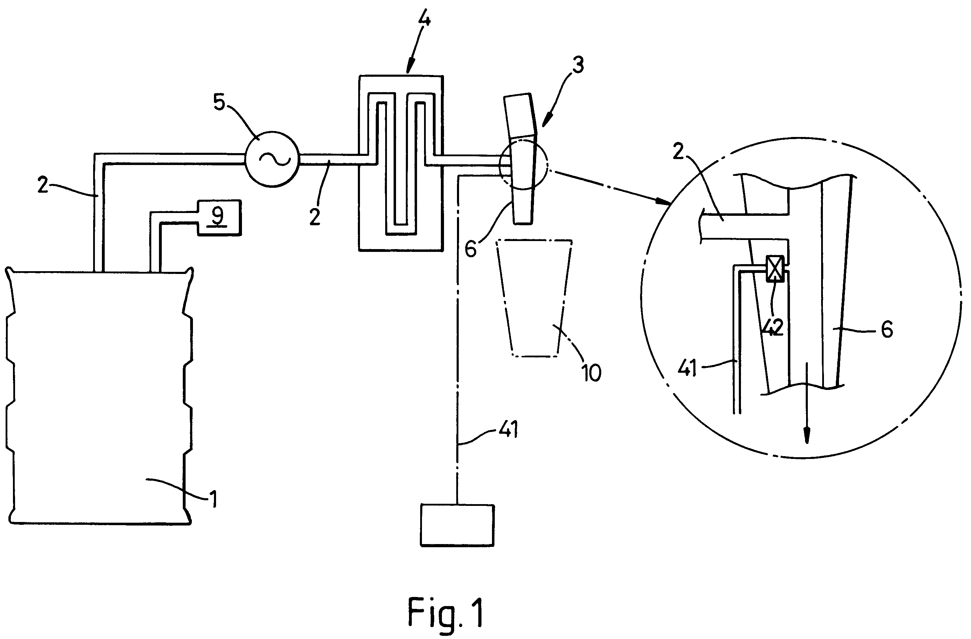

Figure 1 shows schematically a system for dispensing lager at a bar, typical of a public house, comprising a keg of lager, connected by pipework 2 to a dispensing tap 3. The pipework 2 passes through a flash cooler 4. A gas beer pump 5 pressurises the lager in the dispense end of the pipework.

The lager is stored in the keg in a cellar room, at the temperature of the cellar, but is stored at a pressure of 18 psig (psi above atmosphere). The keg is pressurised by gas applied to it from keg, pressuriser 9. This applies a pressurised gas to the keg. The gas that pressurises the keg is 40% nitrogen and 60% carbon dioxide.

As the lager is extracted from the keg and supplied to the tap 3 it is further pressurised by pressurisation pump 5 which pressurises the lager being dispensed to about 50 psig. The lager is passed through the flash cooler 4 and is dispensed at 2°C. The flash cooler may be situated under the bar or close to the dispense tap.

A supply 40 of pressurised nitrogen, at around 50 psig, is connected to a dispensing nozzle 6 via a pipeline 41. The pipeline 41 communicates with the internal bore of the nozzle downstream of a beverage flow control valve (not shown). A gas supply valve 42 is provided in the pipeline (in this example in the nozzle itself).

When the tap 3 is opened lager is pumped into a waiting glass via the nozzle 6. The movement of the control lever to actuate the beer pump also actuates a gas injection sequence. A signal is sent to valve 42 to open for a predetermined time, at a predetermined time during the supply of lager, and high pressure nitrogen is forced into the flowing lager. This causes turbulence and disturbance and creates very many nucleation sites in the lager that is being dispersed at that time. The gas injection is arranged to pour during the first few seconds of the flow of lager. This creates a pint of lager with a very large latent head (or proto head) of small bubbles suspended in the liquid lager, with only a small, or no, body of clear lager beneath the white creamy latent head.

The valve 42 may be a solenoid-operated valve. The opening signal may be triggered by movement of the control lever of the dispense tap to a predetermined position. There may be a delay provided by delay means (eg 1 or 2 seconds) before valve 42 is opened. Alternatively valve 42 may open straight away.

The beverage may experience a relatively low pressure drop across the nozzle 6 (eg a few psig, eg 5 psig). The beverage will have lost pressure due to friction losses before it reaches the nozzle 6.

In another embodiment the gas injection continues for the whole, or substantially the whole, of the time that lager is being dispensed. The gas supply line 41 may join the lager supply line 2 before the lager supply valve (not shown).

In another embodiment the nozzle has a number (eg 6) of small holes (eg 0.9mm in diameter) through which the beverage is dispensed. These can help to generate bubbles.

As times goes by the head settles out (bubbles eventually rising to the surface of the head leaving clear lager beneath) until eventually a glass of lager having a substantial body of clear lager, topped with a head, is formed.

The head is more stable than those of other lagers. The foaming body of gas bubbles suspended in the liquid lager that is originally formed takes longer to settle than known lagers. It takes of the order of 2 or 3 minutes to settle. Furthermore, no matter how far a barperson lets a stream of lager dispensed from a conventional system fall before it enters a glass, it is not possible to get a glass substantially entirely full of head which then settles out to leave a pint of lager in a glass. The present lager and its dispensing system can achieve this because of its gas properties.

The lager has a carbon dioxide content of about 1.5 volume per volume (volume of carbon dioxide at STP per volume of liquid), this is about 3g per litre. This is markedly less than the standard amount of carbon dioxide used in lager.

The lager that is dispensed has a dissolved nitrogen content of about 35mg per litre. This is markedly more than the prior art. However, we suspect that we can make the invention work without so much dissolved nitrogen. The more efficient we can make the nucleation site generation the lower dissolved nitrogen we will need to help generate nucleation sites. It may even be possible to perform the invention with no dissolved nitrogen, or very little.

The lager dispensed in the embodiment is a high dissolved nitrogen, low dissolved carbon dioxide lager. The high nitrogen content means that insoluble nitrogen easily forms small nitrogen bubbles and comes out of the solution as the pressure of the lager is dramatically lowered (from 50 psig to atmospheric pressure), and that the bubbles are small in comparison with the carbon dioxide bubbles which form in conventional dispensed lager.

In the prior art lager carbon dioxide is present in the lager in greater amounts, and at levels above equilibrium at the dispense temperature (usually 6°C), so that when the lager is dispensed large carbon dioxide bubbles form. We believe that these strip out any nitrogen that may be in the prior art dispensed lager since the nitrogen diffuses into the carbon dioxide bubbles and is carried away with them. The large carbon dioxide bubbles grow quickly because of the very large amounts of CO₂ coming out of solution and rise quickly, and there is a body of transparent lager in the glass immediately, or substantially immediately.

Because the carbon dioxide concentration is so low in the present invention (usually, and perhaps necessarily below the equilibrium level) the carbon dioxide does not directly form bubbles. The carbon dioxide does, it is believed, come out of solution despite being below the equilibrium level, because of the presence of so many nucleation sites, but the bubbles grow only a small amount, and so take longer to rise through the liquid, so the glass stays full a of creamy, foamy, mass for longer. Furthermore, because the bubbles are smaller they are more stable and the head is more stable: it lasts longer.

In the present embodiment there is carbon dioxide present in the dispensed lager, but at a far lower level and at a level that is below equilibrium at the new dispense temperature, so that carbon dioxide does not come out of solution to form large carbon dioxide bubbles upon dispense (or at least in not the same volumes). Thus the smaller nitrogen bubbles are not immediately swollen and swept away by a stream of carbon dioxide.

It might be thought that having a carbon dioxide content of a low as 3g per litre would make the lager taste flat, and would take the "bite" out of the lager. This is clearly unacceptable since the initial bite of lager is a major factor in its taste, and in its appeal to its drinkers. However we have overcome the prejudice against lowering the carbon dioxide content. We have realised that if we also lower the temperature, the temperature can give a similar initial "bite" to the drinker.

Furthermore, a very cold lager, as any drinker will know, tastes "thin": it does not have much taste. We have overcome the prejudice against serving very cold lager ( 2°C or so). We have found that lowering the carbon dioxide content alters the palate of the lager and makes it fuller, giving a greater flavour delivery.

Thus although lowering carbon dioxide, and lowering the temperature, of lager are both generally thought to be bad things we have found that if both are lowered the lager tastes good (when it might have been expected to taste bad). Our new lager has an improved taste.

A further advantage of our lager is that because it has less carbon dioxide, and less gas in total in it, than a conventional dispensed lager, it is easier to drink in volume. It does not fill the stomach of the drinker with gas. The drinker may therefore feel more comfortable after drinking the same volume of lager (compared with prior art lager). This advantage applies to other beverages as well.

Our dispensed lager has an appeal to the drinker because it is new. It is well known that some drinkers will be attracted to a new and distinctive drink. The fact that this is the first lager to have a creamy/foamy delivery increases its commercial prospects of success, and makes it a better lager. Equally, the fact that it has a more stable head is a technical advance in the field of lagers. We might expect some beer drinkers who like a head to try our new lager because it has a "proper" head. Our new lager also has better lacing than a typical lager.

It will be appreciated that the invention is applicable to other beverages, such as ales, beer, porter, stout, and the like, as well as lager. It may even be applicable to soft drinks.

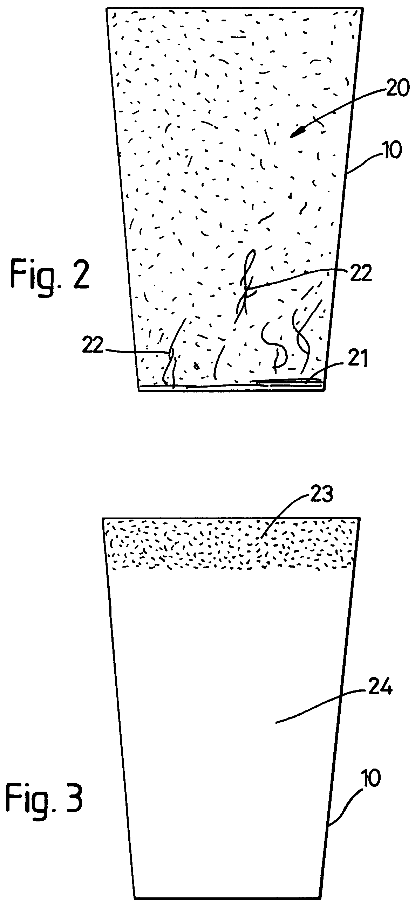

Referring now to Figures 2 to 5, Figure 2 shows a pint of lager in accordance with the invention just after it has been dispensed. It is substantially entirely head (referenced 20). There may be a small layer of liquid lager 21 at the bottom of the glass. There are swirls 22 of rising bubbles towards the bottom of the glass.

Figure 3 shows the pint of Figure 2 after 3 minutes (or perhaps after 2 minutes, or 4 minutes), when the suspension or dispersion of nitrogen bubbles has cleared, with the bubbles rising to form a stable top head 23 with a clear body 24 of lager beneath it. It will usually take at least 1½ minutes, and more usually about 3 minutes for this to be achieved.

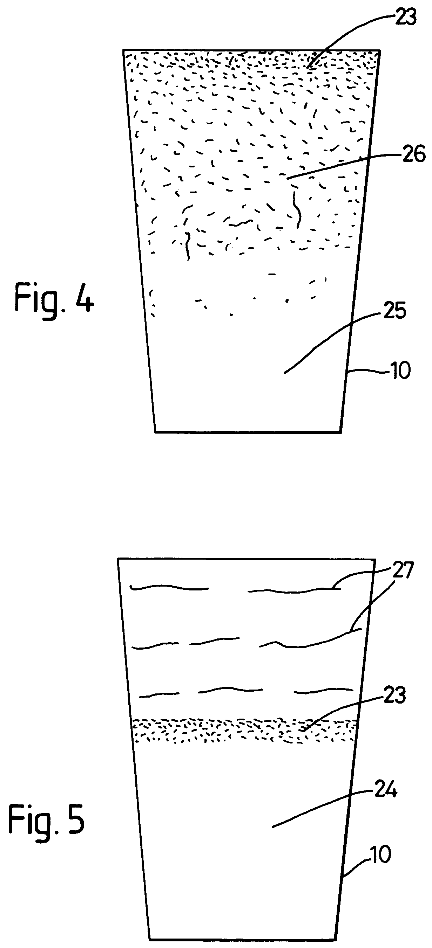

Figure 4 shows the glass of lager of Figure 1 part way through its standing process. The lower part of the glass has substantially clear lager, referenced 25, and the upper part has a suspension of small nitrogen bubbles which are still rising and define a turbulent region 26. A more stable head, head 23, is beginning to form. Figure 4 represents a glass of lager at, say, 1 minute after dispense.

Figure 5 illustrates the stability of the head 23, and the improved lacing of the lager. It shows a glass of lager 20 minutes after dispense. The lacing marks around the sides of the glass are referenced as 27.

When a glass of lager is poured, with the tap a few centimetres from the lip of the glass (for example 5cm), the head fills the glass substantially to the lip of the glass. When the pint of lager has settled out, and the clear body developed, the top of the head is in substantially the same place relative to the glass: it is still substantially at the top of the glass (this is in comparison with prior art lagers where if a large foam head is created, by pouring from a height, the head collapses from the tap, and ends up several centimetres lower than its maximum height - the settled glass is not full). The settled head of the present invention is formed from the turbulent foamy creamy mass from its bottom and does not collapse down significantly in an initial timescale (at least five minutes).

Furthermore, the settled head of one embodiment of the present invention, when formed, is stable enough to make marks in it which can be seen for a time (for example a line can be traced in it with a finger and the line can still be seen after two or three minutes).

It will be appreciated that the size of the bubbles formed in the latent head, and the rate at which they grow, influence the life of the latent head, and their final size also influences the final head stability.

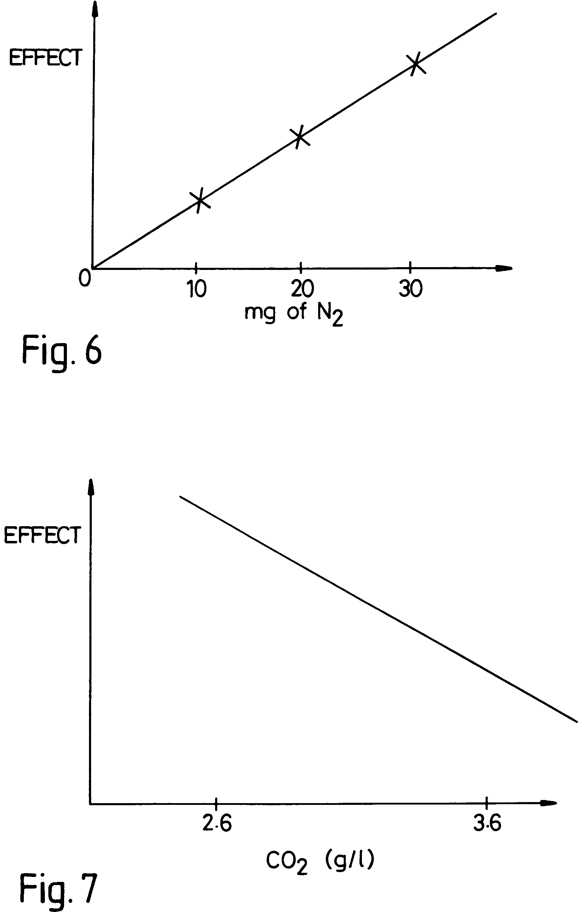

Figure 6 schematically shows that the effect of nitrogen on latent head effect if there is no other nucleation site generating means (no gas injection). The more nitrogen there is in the lager the better the effect of the opaque white creamy latent head. This is believed to be because the dissolved nitrogen acts as a nucleation initiator, and there are more small nitrogen bubbles, and so the carbon dioxide that comes out of solution is spread out over more bubbles and so individual bubbles stay smaller far longer, and so do not rise so quickly. If a nucleation initiator, such as gas injection (or gas laden liquid injection) is used we expect good results with little or no dissolved nitrogen.

Figure 7 schematically shows that the less carbon dioxide there is, the better the effect. This is believed to be because less carbon dioxide comes out of solution to swell the very small nitrogen bubbles (or less CO₂ bubbles rush through the beverage stripping dissolved nitrogen from their path). We want some CO₂ to come out of solution, but not too much.

It is also believed that a larger pressure drop upon dispense produces small bubbles, and hence a longer-lasting latent head.

It will be appreciated that the temperature of the lager influences the equilibrium amount of carbon dioxide. The colder the lager, the more CO₂ we can use and still get the same effect. Thus if we were to use lager at -1°C we may be able to have more than 3.6 g/l carbon dioxide.

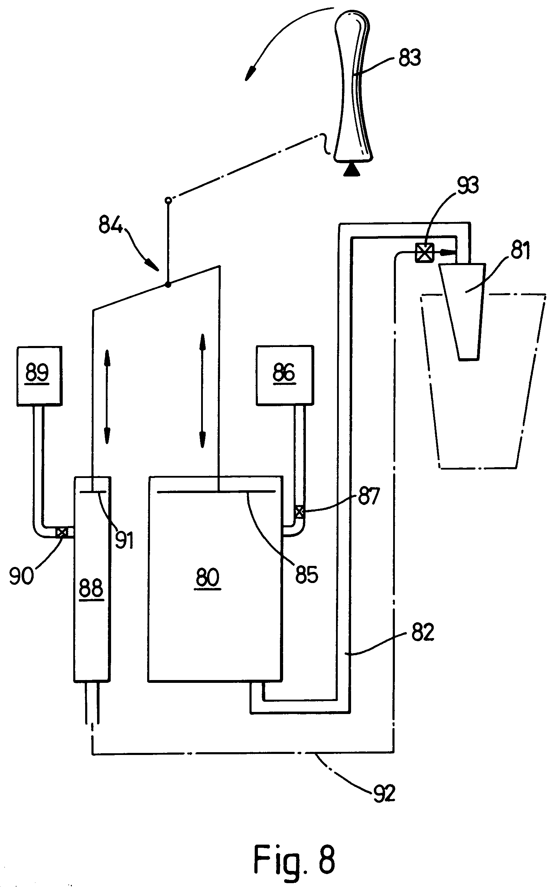

Figure 8 shows another arrangement for dispensing beverages, in this example beer, but the apparatus is applicable to lagers, ales, stouts, and other drinks.

A beer cylinder 80 is connected to a dispense nozzle 81 by a beer pipeline 82. A hand-operated pump handle 83 is connected by linkages 84 to a piston 85 in the beer cylinder 80. When the handle 83 is pulled backwards by the barperson the piston 85 is forced down and beer expelled from the cylinder 80 and dispensed from the nozzle 81. Beer is fed to the beer cylinder from a beer supply 86. A one-way valve 87 is provided to prevent beer from flowing from the cylinder 80 to the beer supply 86.

A gas cylinder, or chamber, 88 is also provided. This is fed gas from a gas supply 89 at a relatively low pressure, say 5 psig. A one-way valve 90 prevents the return of gas to the supply 89. A piston 91 is provided in the gas chamber 88 and is also coupled to the linkages 84. When the hand pump 83 is operated the piston 91 moves along the gas cylinder 88 and pressurises the gas in the chamber. There is a gas supply line 92 leading from the cylinder 88 to the region of the beer pipeline 92 just before the nozzle 81. A valve 93 is provided in the line 92 just before the nozzle. The valve 93 is pressure sensitive in that it opens when it experiences a pressure difference across it of about 40 to 50 psig.

The arrangement of the linkages 84 is such that as the handle 83 is pulled back the piston 91 travels further than the piston 85 during the initial stages of movement so that the gas in the chamber 88 is pressurised before much beer has been dispensed. The pressure in the chamber 88 rises to 50 psig, or above, and the valve 93 opens. This means that high pressure gas is injected into the beer just before it enters the nozzle 81. The beer in the region of the nozzle 81 is agitated by the high pressure gas and many very small nucleation sites are formed in that portion of the beer. The agitated beer falls into the waiting glass and more, unagitated, beer is poured on top of it as the piston 85 moves down its cylinder. (There may be a lost-motion coupling between the piston 91 and the linkages 84 to enable the piston 91 to stay still, or move only a little, whilst piston 85 moves through the majority of its travel, the piston 91 having been advanced earlier). The relatively small volume of agitated beer (for example 1/4 of a pint) has so many nucleation sites in it that it causes a good latent head to be formed.

In the given example it is desired to generate a pint of beer which when initially dispensed is substantially entirely latent head. The initial volume of agitated beer acts as a primer for the later volume of unagitated beer, and the many nucleation sites in the initial volume of agitated beer cause dissolved gas in the beer (usually carbon dioxide) to come out of solution and cause the latent head to form. Gas comes out of solution from the initial volume of agitated beer, and from the unagitated beer.

It is preferred to have the carbon dioxide content of the beer at a level below its equilibrium level. This is believed to create smaller bubbles, and a better, more stable, latent head, and eventual head.

The gas injected into the beer by the pump could be nitrogen, or argon, or any suitable gas, which is preferably relatively insoluble in beer.

It will be appreciated that the arrangement of Figure 8 uses the same action to dispense the beverage and also to trigger the provision of nucleation sites.

Instead of having a pressure sensitive valve 93, or in addition to having it, the apparatus may have position sensing means adapted to sense when a predetermined point in the dispense operation has been reached (for example when the piston 80 or 88, or handle 83, had reached a particular point) and to trigger the release of gas into the beverage being dispensed. The gas may be released a predetermined time after the dispense operation commences.

It will be appreciated that the apparatus of Figure 8, or something like it, could be used to dispense the lager disclosed earlier.

A known volume of gas (typically about 2 or 3 ml) is injected at a known pressure (typically about 50 psi). This enables us to achieve the creation of nucleation sites. The volume of gas is injected substantially at one point in the supply of beverage, as opposed to being introduced into the flowing beverage over a substantial period of time: it is injected as a discrete short, sharp, shock.

We could inject gas into the beer as it is dispensed for a longer period of its dispense. (For example, for about half of the volume dispensed, or two thirds, three quarters, or even for all or substantially all of its volume).

In a modification of the arrangement of Figure 8 the injected gas may be pressurised by the action of returning the handle 83 to its upright, inoperative, position, so that the chamber 86 has pressurised gas in it ready to inject, before the first beverage is dispensed into the glass. This may be achieved by having the pistons 85 and 91 operate in different (eg opposite) directions.

It will be appreciated that an operator of the dispense apparatus does not, in the embodiments shown, have to make their own decisions about when to convert the apparatus from "normal" dispense to "foaming" dispense during the delivery of a pint of beverage: the machine automatically introduces the pressurised gas/gas-laden liquid at an appropriate time in the delivery sequence.

References to "nitrogen" should be taken, from the point of view of the protection we desire, to encompass other inert gases which can be used to achieve the same effect (and which are not carbon dioxide). For example, a noble gas, eg helium or neon might conceivably be tried, but of course we prefer to use nitrogen.

In experimental trials we have found that a beverage with a carbon dioxide level of 1.35 vol/v to 1.55 vols/vol is especially good. At lower carbon dioxide levels the beverage tastes flat (at 2°C). At higher carbon dioxide levels we experience severe problems dispensing the beverage without uncontrollable fob, especially if the temperature rises. 2°C is the best temperature we have found, but acceptable results have been achieved at 2°C ± 2°C.

## Claims

1. A method of dispensing a beverage so as to produce a relatively large latent head comprising many bubbles of gas suspended or dispersed in the beverage, the method comprising introducing to the beverage at the point of dispensing it, or just before it is dispensed, an amount of pressurised gas, or of liquid with a significant amount of dissolved gas in it.

2. A method according to claim 1 characterised in that a relatively small volume (eg 1% or less of the total volume of beverage dispensed into a container 10) of high pressure gas, or highly gas-laden liquid, is introduced.

3. A method according to claim 1 or claim 2 characterised in that the gas or gas-laden liquid is introduced during the initial stage of delivery of a volume of beverage, or at an early stage during the delivery of the volume of beverage, and in which the gas or gas-laden liquid is not introduced at a later stage of delivery of the beverage.

4. A method according to any preceding claim characterised in that the beverage is dispensed from a dispensing nozzle (6) or orifice, and in which the pressurised gas or gas-laden liquid is introduced to the beverage at the nozzle (6) or orifice, or just upstream of it.

5. A method according to any preceding claim comprising providing nucleation site - creating means which creates nucleation sites in the beverage as it is dispensed, which nucleation sites develop bubbles from gas coming out of solution from the beverage.

6. A method according to any preceding claim in which the beverage has a dissolved carbon dioxide, or other gas, content that is at a level at or below the equilibrium content of carbon dioxide (or other gas) for the beverage at the chosen dispense temperature.

7. A method according to any preceding claim characterised in that the dispensed beverage is at about 2°C.

8. Beverage dispensing apparatus comprising dispense means for dispensing a beverage, and nucleation site generating means adapted to generate many small bubbles in the dispensed beverage.

9. Beverage dispense apparatus according to claim 8 in which the nucleation site generation means comprises fluid introduction means adapted to introduce a fluid to the beverage.

10. Beverage dispense apparatus according to claim 8 or claim 9 in which the nucleation site generating means is adapted to introduce in use a pressurised gas, or a gas-laden liquid, into the beverage during dispense, or just before dispense.

11. Beverage dispense apparatus according to claim 9 or claim 10 in which the fluid is injected into the beverage.
